(19) **Europäisches Patentamt**
**European Patent Office**
**Office européen des brevets**

(11) **EP 2 181 361 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(21) Anmeldenummer: **08786426.0**

(22) Anmeldetag: **25.07.2008**

(51) Int Cl.:
**G03H 1/22** *(2006.01)*        **G03H 1/32** *(2006.01)*

(86) Internationale Anmeldenummer:
**PCT/EP2008/059765**

(87) Internationale Veröffentlichungsnummer:
**WO 2009/016105 (05.02.2009 Gazette 2009/06)**

(54) **HOLOGRAPHISCHE REKONSTRUKTIONSEINRICHTUNG**

HOLOGRAPHIC RECONSTRUCTION DEVICE

DISPOSITIF DE RECONSTRUCTION HOLOGRAPHIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.07.2007 DE 102007036127**

(43) Veröffentlichungstag der Anmeldung:
**05.05.2010 Patentblatt 2010/18**

(73) Patentinhaber: **SeeReal Technologies S.A.**
**5365 Munsbach (LU)**

(72) Erfinder: **LEISTER, Norbert**
**01279 Dresden (DE)**

(74) Vertreter: **Bradl, Joachim et al**
**SeeReal Technologies GmbH**
**Blasewitzer Straße 43**
**01307 Dresden (DE)**

(56) Entgegenhaltungen:
**EP-A- 0 590 828        WO-A-2006/066919**
**WO-A-2008/138885**

EP 2 181 361 B1

**Beschreibung**

Die Erfindung betrifft eine Einrichtung zum Erzeugen einer holographischen Rekonstruktion einer dreidimensionalen Szene, die aus einer Anzahl von Objekten besteht. Zum Berechnen und Kodieren von Hologrammen der Szene wird diese in einzelne Objektpunkte zerlegt, die zu Objektpunktgruppen zusammengestellt und als computergenerierte Hologramme (CGH) in einem Lichtmodulationsmittel dargestellt werden. Mittels kohärentem Licht und einem Rekonstruktionsmittel werden einzelne Rekonstruktionen von jeweils einer Objektpunktgruppe erzeugt und überlagert, wodurch ein Betrachter von einer Augenposition aus die Szene zeitlich gemittelt mit reduziertem Specklemuster sieht.

Die Erfindung betrifft ebenso ein Verfahren zum Erzeugen einer holographischen Rekonstruktion einer Szene, mit dem Specklemuster reduziert werden können.

Anwendungsgebiet der Erfindung sind Einrichtungen, mit denen die Speicherung und Rekonstruktion komplexer Wellenfronten einer dreidimensionalen Szene durch Holographie unter Verwendung von kohärentem Laserlicht in Echtzeit oder echtzeitnah erfolgt und bei denen die Rekonstruktion von einem Sichtbarkeitsbereich aus, der auch als Betrachterfenster bezeichnet wird, zu sehen ist. Zur Modulation der Wellenfronten des einfallenden kohärenten Lichts mit den komplexen Werten der Szene ist ein Lichtmodulationsmittel mit steuerbaren Elementen vorgesehen.

Ein spezieller Typ eines holographischen Displays, in welchem das erfindungsgemäße Verfahren angewendet werden kann, ist aus früheren Dokumenten der Anmelderin bekannt, z.B. aus (1) EP 1 563 346 A2, (2) DE 10 2004 063 838 A1 oder (3) DE 10 2005 023 743 A1.

Dort wird eine Hologrammberechnung auf folgender Grundlage durchgeführt: Eine dreidimensionale Szene wird zum Kodieren und holographischen Rekonstruieren in Schnittebenen zerlegt, die eine Vielzahl von Objektpunkten der Szene enthalten. Die Objektpunkte charakterisieren sowohl die Fläche als auch in der Summe aller Flächen die räumliche Szene. Sie werden in verschiedene steuerbare Elemente des Lichtmodulationsmittels mit komplexen Werten eingeschrieben bzw. kodiert und bilden im Lichtmodulationsmittel für jeden Objektpunkt einen separaten Bereich. Ein derartiger separater Bereich wird als das Subhologramm dieses Objektpunktes bezeichnet.

Das Subhologramm entspricht ungefähr einer holographisch kodierten Linsenfunktion, die diesen einen Objektpunkt in ihrem Brennpunkt rekonstruiert. Der Betrag der komplexen Werte, also die Amplitude, ist über die Ausdehnung des Subhologramms ungefähr konstant und hängt in seiner Größe von der axialen Entfernung des Objektpunktes zum Bildschirm und von der Intensität des Objektpunktes ab.

Die Phasenverteilung der komplexen Werte im Bereich des Subhologramms entspricht ungefähr der Funktion einer Linse, deren Brennweite von der axialen Entfernung des Objektpunktes zum Lichtmodulationsmittel bzw. Bildschirm abhängt. Beim Durchgang von kohärentem Licht durch den Lichtmodulator verändern die komplexen Werte, die in die steuerbaren Elemente des Subhologramms eingeschriebenen sind, die Amplitude und/oder Phase des Lichts. Mit dem modulierten Licht kann der Objektpunkt rekonstruiert werden. Außerhalb des Subhologramms hat dieser Objektpunkt im Lichtmodulationsmittel den Wert Null. Das insgesamt kodierte Hologramm der Szene erhält man durch Aufaddieren der komplexen Werte der einzelnen Subhologramme.

Die holographische Rekonstruktion der Szene wird durch ein Rekonstruktionsmittel in einem Rekonstruktionsraum erzeugt, der vom Sichtbarkeitsbereich und dem Lichtmodulationsmittel aufgespannt wird. Die von den kodierten Hologrammen der Szene ausgehenden Wellenfronten überlagern sich im Sichtbarkeitsbereich, so dass die rekonstruierten Objektpunkte dort von einer Augenposition aus zu sehen sind. Die Rekonstruktion aus den überlagerten modulierten Wellenfronten wird erzeugt, indem für jedes Auge eines Betrachters im Zeit- oder Raummultiplex unterschiedliche perspektivische Ansichten der Szene erzeugt werden, die sich in der Parallaxe unterscheiden, aber vom Gehirn als eine einzige holographische 3D-Darstellung gesehen werden.

Zum Betrachten der Rekonstruktion der 3D-Szene kann der Betrachter entweder auf ein Lichtmodulationsmittel schauen, in welches ein Hologramm der Szene direkt kodiert ist und das als Bildschirm dient. Dies wird als Direktsichtaufbau bezeichnet.

Alternativ kann der Betrachter auf einen Bildschirm schauen, auf den entweder eine Abbildung oder eine Transformierte der im Lichtmodulationsmittel kodierten Hologrammwerte projiziert wird. Dies wird als Projektionsaufbau bezeichnet.

Die Augenpositionen von Betrachtern werden in bekannter Weise von einem Positionsfinder ermittelt, der programmtechnisch, das heißt softwaremäßig, mit einem Speichermittel und einer Recheneinheit sowie einem Systemsteuermittel gekoppelt ist. Im Speichermittel liegen auch die zur Berechnung des CGH der Szene benötigten Informationen der Objektpunkte in Datensätzen als Look-up-Tabelle gespeichert vor.

Da auf dem Lichtmodulationsmittel nur eine diskrete Aufzeichnung möglich ist, erfolgt zur Hologrammberechnung eine diskrete Abtastung der Objektpunkte der Szene. Mit bestimmten Kodierverfahren ist es möglich, eine Rekonstruktion zu erzeugen, die am Ort der Abtastpunkte mit der abgetasteten Szene vollständig übereinstimmt. Die physikalische Rekonstruktion ergibt aber einen kontinuierlichen Verlauf der rekonstruierten Lichtintensität auch zwischen den Abtastpunkten. An diesen Orten treten Abweichungen vom Intensitätsverlauf in der Szene auf, die zu den Specklemustern der Rekonstruktion führen und die Qualität der holographischen Darstellung mindern. Dies ist besonders dann der Fall, wenn die Berechnung des Hologramms mit einer Zufallsphase der Objektpunkte durchgeführt wird.

Man versteht allgemein unter einem Specklemuster ein granulationsartiges Interferenzmuster, das als eine räumliche Struktur mit zufällig verteilten Intensitätsminima und -maxima durch Interferenz vieler Lichtwellen mit statistisch unregelmäßig verteilten Phasendifferenzen entsteht. Diese Specklemuster stören die Qualität der Wahrnehmung der rekonstruierten Szene.

Ein Reduzieren der Specklemuster bei der Rekonstruktion der 3D-Szene kann prinzipiell durch zeitliche oder/und räumliche Mittelung erreicht werden. Dabei mittelt immer das Auge des Betrachters über mehrere ihm dargestellte Rekonstruktionen, von denen jede ein unterschiedliches Specklemuster aufweist. Das Specklemuster ist beispielsweise dann zufällig und unterschiedlich, wenn die Objektpunkte der Szene unterschiedliche Zufallsphasen aufweisen. Durch die Mittelung nimmt der Betrachter eine Verringerung des Specklemusters wahr.

So wird z.B. im Dokument von Donghyun Kim " Reduction of coherent artifacts in dynamic holografic three-dimensional displays by diffraction-specific pseudorandom diffusion" eine zeitliche Mittelung zur Reduzierung von Specklemustern beschrieben. Verschiedene Hologramme einer Szene werden nacheinander berechnet und dargestellt, wobei die einzelnen Objektpunkte der Szene mit unterschiedlichen relativen Phasendifferenzen überlagert werden. Dadurch mitteln die Augen zeitlich die Interferenzeffekte, also die Specklemuster, aus. Bei derartigen Verfahren muss man aber einen erhöhten Rechenaufwand durch die Berechnungen vieler Hologramme hinnehmen, da jedes Hologramm stets für alle Objektpunkte berechnet wird, was aber bei einer Echtzeitdarstellung von rekonstruierten Szenen nachteilig ist.

Zusätzlich werden preiswerte Lichtmodulationsmittel zur holographischen Wiedergabe mit schnelleren Schaltzeiten benötigt. Diese sind momentan aber nicht erhältlich.

Weiterhin ist bei der Rekonstruktion einer Szene in einem holographischen Display das Auflösungsvermögen des menschlichen Auges zu beachten.

Damit flächige Anteile einer Szene von einem Betrachter auch als zusammenhängende Fläche wahrgenommen werden und nicht als eine Ansammlung von einzelnen Punkten, darf bei der rechnerischen Zerlegung der Szene in Objektpunkte innerhalb dieser Fläche bzw. Schnittebene ein bestimmter Abstand zwischen benachbarten Objektpunkten nicht überschritten werden. Insbesondere die zwischen nahe beieinander liegenden Objektpunkten auftretenden Interferenzen tragen aber zu einem großen Teil zu den Specklemustern bei, die beseitigt werden müssen.

Es ist Aufgabe der Erfindung, das Berechnen und Kodieren von computergenerierten Hologrammen (CGH) einer Szene so zu gestalten, dass das Auftreten von Specklemustern bei der holographischen Rekonstruktion der Szene weitestgehend unterdrückt wird, ohne den Rechenaufwand zu erhöhen. Gleichzeitig soll in einer derart gestalteten holographischen Rekonstruktionseinrichtung die holographische Darstellung der Szene insgesamt in guter Qualität zu sehen sein.

Das der Erfindung zugrunde liegende prinzipielle Verfahren zur Hologrammberechnung und holographischen Rekonstruktion einer dreidimensionalen Szene wird im Stand der Technik erklärt. Es basiert darauf, dass sich die Szene aus Objekten und diese wiederum aus Objektpunkten zusammensetzen. Zur Rekonstruktion der Szene sind verschiedene Mittel vorgesehen, die in Systemsteuermitteln vereint sind oder mit diesen zusammenwirken. Sie ermögliche, dass Objektpunkte ausgewählt und zu Objektpunktgruppen zusammengefasst werden und dass die Objektpunktgruppen als einzelne CGH berechnet und dargestellt werden können. Durch das Zusammenwirken der verschiedenen Mittel wird eine Überlagerung von Lichtwellenfronten der einzelnen Rekonstruktionen der Objektpunktgruppen erreicht, so dass die Augen eines Betrachters die resultierende Rekonstruktion der Szene in einer Augenposition sehen.

Basierend auf diesem Prinzip wird die Aufgabe erfindungsgemäß durch eine Einrichtung gemäß Anspruch 11 gelöst, in der sowohl das Auswählen von Objektpunkten in den Schnittebenen anhand des Rasters als auch die Zusammenstellung der Objektpunkte zu Objektpunktgruppen durch Systemsteuermittel in Abhängigkeit von der sichtbaren Auflösung der Rekonstruktion der Szene erfolgt.

Zum Anpassen an die sichtbare Auflösung der Rekonstruktion der Szene durch Systemsteuermittel

- ist in jeweils einer Schnittebene ein Rastermass für die Objektpunkte generiert, mit dem benachbarte Objektpunkte in der Schnittebene für den Betrachter nicht getrennt auflösbar sind, und
- erfolgt die Zusammenstellung von Objektpunkten der jeweiligen Schnittebene zu einer Objektpunktgruppe mit solchen Objektpunkten, die für den Betrachter getrennt auflösbar sind.

Auf diese Weise wird jeder Objektpunkt der zerlegten Szene für die Rekonstruktion ausgewählt. Dadurch wird vorteilhaft erreicht, dass jeder Objektpunkt nur einmal einer Objektpunktgruppe zugeordnet wird und weniger Hologramme von Objektpunktgruppen berechnet und kodiert werden müssen. Das führt neben dem Reduzieren von Specklemustern insgesamt auch zu einer Verkürzung der Rechenzeit.

Erfindungsgemäß wird vorgeschlagen, die sichtbare Auflösung der Rekonstruktion der Szene an das Auflösungsvermögen des menschlichen Auges anzupassen.

Das Auflösungsvermögen des Auges wird durch eine Airy Funktion $2*j1(r-r0) / (r-r0)$ beschrieben, wobei mit $r0 = (x0, y0)$ die Koordinate eines Objektpunktes und mit $r-r0$ der Abstand von dieser Koordinate innerhalb einer Schnittebene sowie mit j1 eine Besselfunktion bezeichnet sind.

Zum Realisieren der Airy Funktion ist in der Einrichtung ein Positionsfinder zum Erfassen der Daten der aktuellen Augenposition mindestens eines Betrachters und der aktuellen Größe der Augenpupille dieses Betrachters vorgesehen. Weiterhin sind in der Einrichtung Recheneinheiten vorgesehen, um mit dem Abstand der aktuellen Augenposition von der jeweiligen Schnittebene der Szene und dem aktuellen Pupillendurchmesser eines Betrachters eine Objektpunktdichte zu berechnen, mit der das Rastermaß für die Objektpunkte in der jeweiligen Schnittebene vom Systemsteuermittel bestimmt wird.

Der aktuelle Pupillendurchmesser kann auch über einen Helligkeitswert ermittelt werden, indem der Positionsfinder einen Sensor zum Erfassen eines aktuellen Helligkeitswertes der zu rekonstruierenden Szene oder des Umgebungslichts in einem Rekonstruktionsraum aufweist.

Weiterhin kann erfindungsgemäß die sichtbare Auflösung der Rekonstruktion der Szene an die Abbildungseigenschaften des Rekonstruktionsmittels angepasst werden.

Dazu wird vorgeschlagen, die Abbildungseigenschaften des Rekonstruktionsmittels wahlweise durch eine Simulation oder aus einer Messkurve zu ermitteln. Hierbei kann für verschiedene Schnittebenen die Punktbildfunktion (english Point Spread Funktion, PSF) für eine Abbildung der Lichtquelle in die jeweilige Schnittebene mittels einer Kombination aus dem Rekonstruktionsmittel und einer im Lichtmodulationsmittel kodierten Linse entweder mit einer geeigneten Optik-Software berechnet oder experimentell ermittelt werden.

Insbesondere können die für die sichtbare Auflösung kennzeichnenden lateralen Abstände der Objektpunkte aus der Simulation oder der Messkurve entnommen und in den entsprechenden Datensätzen des Speichermittels gespeichert werden.

Es ist weiterhin vorgesehen, dass die Systemsteuermittel die Objektpunkte in einer Schnittebene sowohl in Abhängigkeit von einer aktuellen Augenposition des Betrachters als auch in Abhängigkeit vom Auflösungsvermögen des Rekonstruktionsmittels auswählen und zu Objektpunktgruppen zusammenstellen.

Die erfindungsgemäße Einrichtung ist weiterhin so gestaltet, dass die Systemsteuermittel das Kodieren der CGH im Lichtmodulationsmittel und das nachfolgende Rekonstruieren der Objektpunktgruppen der Szene steuern. Dabei sind die Objektpunktgruppen im Lichtmodulationsmittel zweidimensional kodiert. Sie können aber auch eindimensional im Lichtmodulationsmittel kodiert sein.

Die Aufgabe der Erfindung wird ebenfalls durch ein Verfahren gemäß Anspruch 1 zum holographischen Rekonstruieren einer Szene gelöst, dessen Verfahrensschritte im Wesentlichen mit den bereits beschriebenen Mitteln der Einrichtung ausgeführt werden können.

Das Verfahren ist dadurch gekennzeichnet, dass die Systemsteuermittel sowohl das Auswählen von Objektpunkten in den Schnittebenen anhand des Rasters als auch die Zusammenstellung der Objektpunkte zu Objektpunktgruppen in Abhängigkeit von der sichtbaren Auflösung der Rekonstruktion der Szene vornehmen.

Entsprechend generieren die Systemsteuermittel

- in jeweils einer Schnittebene ein Rastermaß für die Objektpunkte, mit dem benachbarte Objektpunkte in der Schnittebene für den Betrachter nicht getrennt auflösbar sind, und
  stellen die Systemsteuermittel
- diejenigen Objektpunkte der jeweiligen Schnittebene, die für den Betrachter getrennt auflösbar sind, zu einer Objektpunktgruppe zusammen.

Der Verfahrensschritt der inkohärenten Überlagerung der einzelnen Rekonstruktionen kann zeitsequentiell ausgeführt werden, so dass die Augen des Betrachters zeitlich die Intensität der Rekonstruktion über die Summe der Intensitäten der einzelnen Rekonstruktionen mitteln.

Es ist jedoch auch möglich, die inkohärente Überlagerung der einzelnen Rekonstruktionen gleichzeitig durchzuführen. Dazu besteht das Lichtmodulationsmittel aus mehreren Lichtmodulatoren, in die gleichzeitig ein CGH kodiert wird. Mit diesen CGH werden mit der entsprechenden Anzahl von Rekonstruktionsmitteln gleichzeitig mehrere einzelne Rekonstruktionen mit zueinander unterschiedlichen Specklemustern erzeugt und deren Lichtwellenfronten am Ort der Augenposition gleichzeitig überlagert.

Weiterhin kann die sichtbare Auflösung der Rekonstruktion der Szene an das Auflösungsvermögen des Lichtmodulationsmittels angepasst werden.

In Ausgestaltung der Erfindung wird ein Verfahren zum holographischen Rekonstruieren einer farbigen Szene beschrieben, bei dem die Zerlegung der farbigen Szene in unterschiedliche Farbanteile programmtechnisch im Systemsteuermittel erfolgt und die farbige Rekonstruktion der Szene aus mindestens zwei unterschiedlichen einfarbigen Rekonstruktionen verschiedener Wellenlängen des Lichts erzeugt wird, wobei für jeden Farbanteil jeweils eine Zerlegung der Szene in Objektpunkte, eine Zusammenstellung der Objektpunkte zu Objektpunktgruppen und eine Berechnung der einfarbigen CGH separat erfolgt.

In einer Ausbildung des Verfahrens ist beim Einsatz von drei Grundfarben vorgesehen, dass in den Datensätzen der Objektpunkte für das Raster in einer Schnittebene für jede Wellenlänge der drei Grundfarben unterschiedliche Rastermaße und für die Objektpunktgruppen unterschiedliche Mindestabstände von den Recheneinheiten vorgegeben werden.

Ein anderer, zweckmäßiger Verfahrensschritt sieht vor, dass in den Datensätzen der Objektpunkte für jede Wellenlänge der drei Grundfarben gleiche Rastermaße für das Raster und für die Objektpunktgruppen gleiche Mindestabstände durch die Recheneinheiten vorgegeben werden.

In einem weiteren Verfahrensschritt zur farbigen Rekonstruktion der Szene wird das Rastermaß für die Objektpunkte der Szene in den Recheneinheiten so klein definiert, dass für die Wellenlängen der drei Grundfarben die Objektpunkte nicht mehr getrennt aufgelöst werden können. Weiterhin wird als zweites zu erfüllendes Kriterium der Mindestabstand der Objektpunkte innerhalb einer Objektpunktgruppe in den Recheneinheiten so groß definiert, dass für die Wellenlängen der drei Grundfarben die Objektpunkte getrennt aufgelöst werden können.

Das Berechnen und Kodieren von computergenerierten Hologrammen (CGH) einer Szene in einer holographischen Rekonstruktionseinrichtung, welche die beschriebenen erfindungsgemäßen Merkmale aufweist, hat gegenüber dem Stand der Technik folgende Vorteile:

- das Auftreten von Specklemustern bei der holographischen Rekonstruktion der Szene kann weitestgehend unterdrückt werden
- jeder Objektpunkt wird nur ein einziges Mal in einer Berechnung verwendet
- bei einer zeitsequentiellen Ausführung müssen nur wenige Einzelhologramme berechnet und nacheinander angezeigt werden
- die Anforderungen an Rechenkapazität und Rechengeschwindigkeit werden verringert.

Die Erfindung wird nachstehend an Ausführungsbeispielen näher erläutert. In den dazugehörigen Zeichnungen zeigen

Fig. 1 den Verlauf der Amplitude der Airy Funktion für zwei Objektpunkte, die nicht mehr getrennt aufgelöst werden,

Fig. 2 die berechneten Intensitäten für eine destruktive und eine konstruktive Interferenz und für eine inkohärente Überlagerung dieser Objektpunkte,

Fig. 3 eine Simulation der Rekonstruktion einer flächigen Szene aus mit Zufallsphasen berechneten Objektpunkten mit einem Objektpunktabstand gemäß Fig. 1 und 2,

Fig. 4 die analogen Überlagerungen für einen vierfach größeren Abstand zwischen den zwei Objektpunkten aus Fig. 2,

Fig. 5 eine Simulation der Rekonstruktion einer flächigen Szene aus mit Zufallsphasen berechneten Objektpunkten mit einem Objektpunktabstand gemäß Fig. 4,

Fig. 6 eine Simulation einer Rekonstruktion, bei der 16 Einzelrekonstruktionen erzeugt und inkohärent überlagert wurden, und

Fig. 7 eine schematische Darstellung der Hauptkomponenten eines holographischen Displays gemäß der Erfindung.

Die erfindungsgemäße holographische Rekonstruktionseinrichtung umfasst wenigstens ein Lichtmodulationsmittel, ein Rekonstruktionsmittel und ein Lichtquellenmittel, die ein- oder mehrteilig ausgebildet sein können. Weiterhin sind Systemsteuermittel vorgesehen, die mehrere Speichermittel und Recheneinheiten aufweisen, um die programmtechnischen Berechnungen und Abläufe in der holographischen Rekonstruktionseinrichtung auszuführen und zu koordinieren.

Die Erfindung wird im Verfahrensablauf hauptsächlich an zwei Objektpunkten, die stellvertretend für die gesamte Szene dienen, beschrieben.

Wie eingangs angeführt, werden durch die Beugung des kohärenten Lichts des Lichtquellenmittels störende Interferenzmaxima und Interferenzminima zwischen einzelnen Objektpunkten einer Szene hervorgerufen. Diese sieht ein Betrachter als eine störende granulare Struktur, die als Specklemuster bezeichnet wird.

Die Erfindung beseitigt die Specklemuster dadurch, dass die Auflösung der Rekonstruktion der Szene an die für das Auge sichtbare Auflösung oder an die Abbildungseigenschaften des Rekonstruktionsmittels oder an die Auflösung des Lichtmodulationsmittels angepasst wird. Dafür müssen die Objektpunkte der Szene zwei verschiedenen Kriterien genügen, auf die in den Ausgestaltungsbeispielen näher eingegangen wird.

Ein Betrachter sieht eine Rekonstruktion mit seiner Augenpupille. Dabei wirkt die Pupille als beugungsbegrenzende Öffnung.

Bei einer kreisförmigen Öffnung wie der Augenpupille wird das Auflösungsvermögen des Auges und damit der Verlauf der Amplituden von Objektpunkten allgemein durch die Airy Funktion

## 2*j1(r-r0) / (r-r0) beschrieben.

Dabei sind r0 = (x0, y0) die Koordinate eines Objektpunktes und r-r0 der Abstand von dieser Koordinate innerhalb einer Schnittebene der Szene, und j1 ist eine Besselfunktion.

Sofern durch das Rekonstruktionsmittel keine anderen begrenzenden Faktoren gegeben sind, sieht der Betrachter einen Objektpunkt als ein Beugungsscheibchen. Dieses Beugungsscheibchen hat den Durchmesser Bd = 1,22 lambda D / dp.

Dabei sind mit D der Abstand zwischen der Ebene der aktuellen Augenposition und der jeweiligen Schnittebene, mit lambda die Wellenlänge des Lichtes und mit dp der Durchmesser der Augenpupille bezeichnet.

Zwei Objektpunkte an den Orten r0a und r0b können noch als getrennt aufgelöst wahrgenommen werden, wenn ihr Abstand zueinander r0b-r0a >= 1,22 lambda D /dp ist. Dann fällt das Maximum der Funktion J1(r-r0a) / (r-r0a) für den einen Objektpunkt mit dem ersten Minimum der Funktion J2 (r-r0b) / (r-r0b) für den anderen Objektpunkt zusammen.

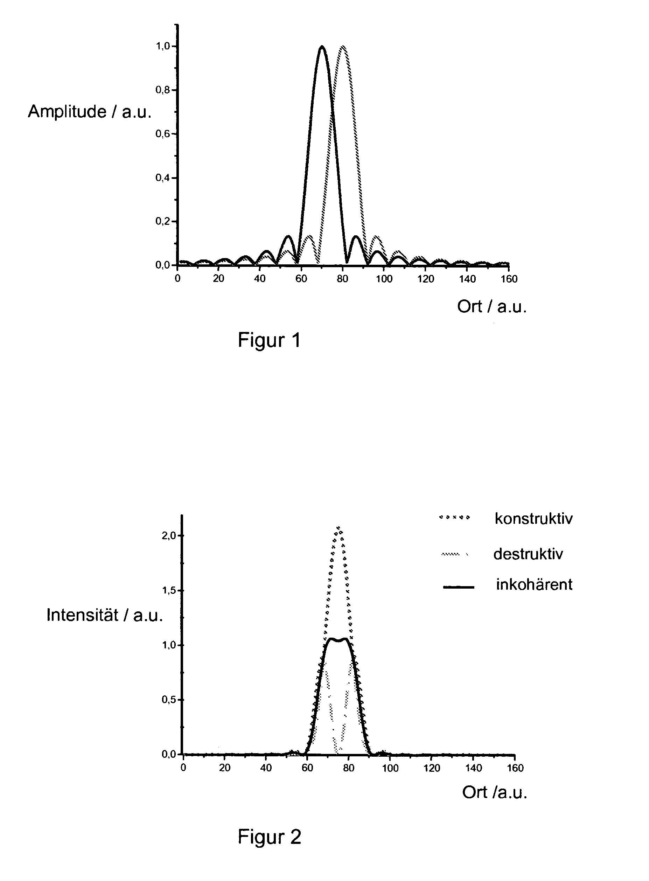

In Fig. 1 sind die Amplitudenverläufe zweier Objektpunkte dargestellt, deren Abstand 1,0 lambda D / dp beträgt. Die Amplituden überlappen sich deutlich und können von Betrachteraugen nicht mehr getrennt aufgelöst wahrgenommen werden.

Liegen die Beugungsscheibchen zweier Objektpunkte dicht beieinander und überlappen sich, so beeinflussen die relativen Phasen beider Objektpunkte maßgeblich die resultierende kohärente Rekonstruktion dieser Objektpunkte. Es können daher für eine konstruktive Interferenz deutliche Intensitätsmaxima oder für eine destruktive Interferenz deutliche Intensitätsminima entstehen.

In Fig. 2 sind die berechneten Intensitäten für eine destruktive und eine konstruktive Interferenz sowie für eine inkohärente Überlagerung der Objektpunkte aus Fig. 1 an einem Ort dargestellt. Die inkohärente Überlagerung entspricht etwa dem erwarteten Wert für eine flächige Szene. Wenn man mehr als zwei Objektpunkte mit diesem Abstand nebeneinander im Raster erfasst, erhält man in der erzeugten Rekonstruktion dieser Objektpunkte einen zusammenhängenden flächigen Bereich mit etwa konstanter Intensität.

Die Intensität für den allgemeinen Fall einer kohärenten Überlagerung - abhängig von der relativen Phase beider Objektpunkte - liegt zwischen den Extremfällen der destruktiven und konstruktiven Interferenz. Die Interferenz bei der kohärenten Überlagerung mehrerer Objektpunkte würde dagegen ein Specklemuster hervorrufen.

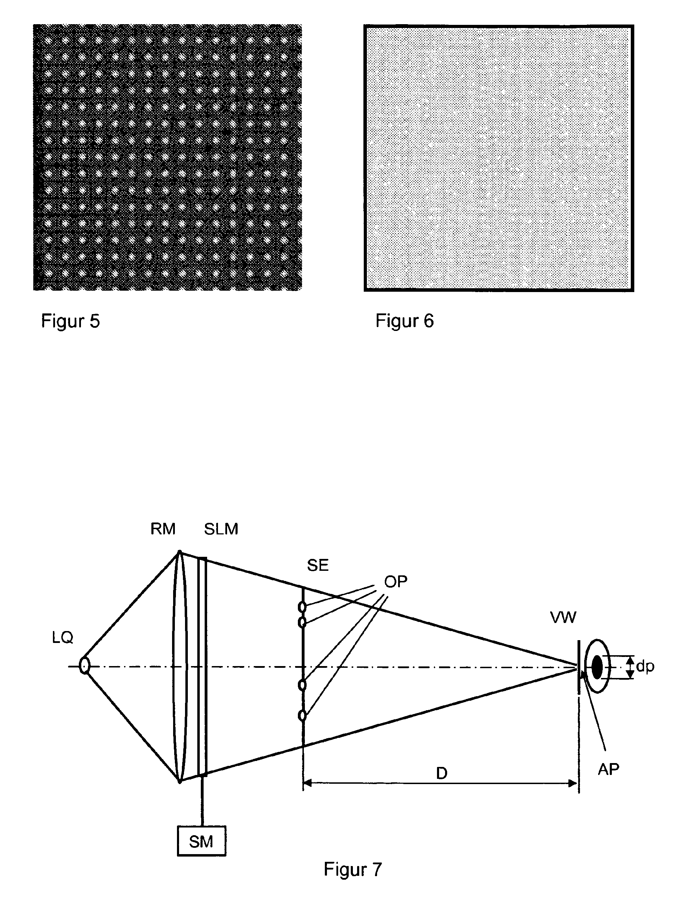

Der Betrachter sieht die Rekonstruktion der Szene entsprechend Fig. 7 von der Augenposition AP aus, die innerhalb eines Sichtbarkeitsbereichs liegt, der auch als Betrachterfenster VW bezeichnet wird. Dieses Betrachterfenster VW ist üblicherweise etwas größer als die Augenpupille.

Maßgeblich für die Art der auftretenden Interferenz ist der optische Wegunterschied des Lichtes von verschiedenen Objektpunkten OP zum Betrachterfenster VW.

Für verschiedene Positionen der Augenpupille innerhalb des Betrachterfensters VW unterscheidet sich aber dieser optische Wegunterschied. Daher können für eine Augenbewegung innerhalb des Betrachterfensters VW unterschiedliche Interferenzen auftreten. Im Extremfall ist ein Wechsel von konstruktiver nach destruktiver Interferenz oder umgekehrt möglich.

Damit ein Betrachter aus allen Augenpositionen AP innerhalb des Betrachterfensters VW eine Rekonstruktion in guter Qualität sieht, ist es notwendig, geringe Unterschiede zwischen konstruktiver und destruktiver Interferenz zu haben.

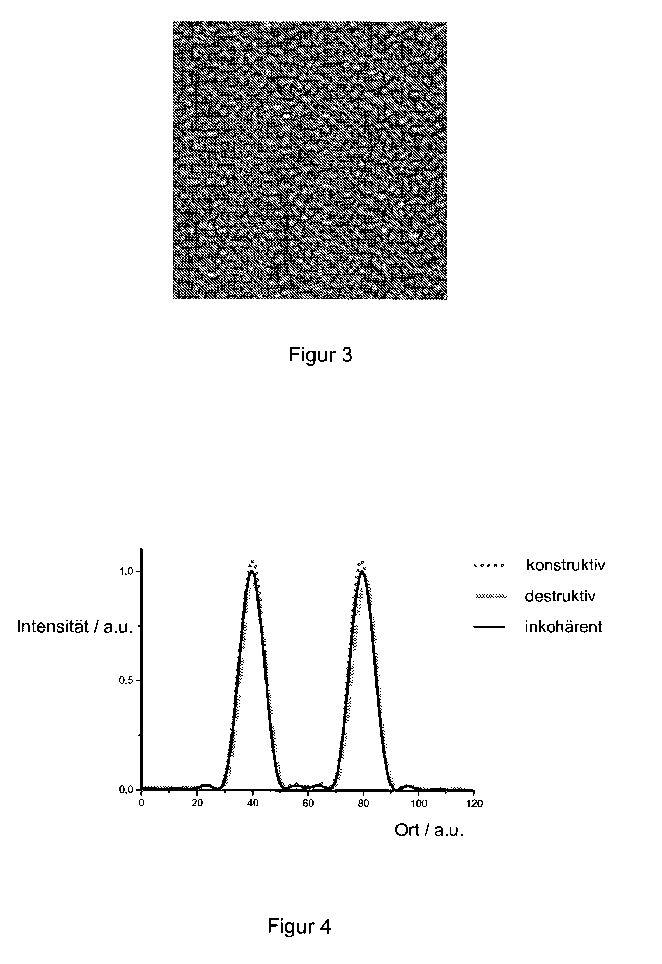

In Fig. 3 ist eine Simulation der Rekonstruktion einer flächigen Szene, also einer zweidimensionalen Anordnung, aus mit Zufallsphasen berechneten Objektpunkten für einen Objektpunktabstand gemäß Fig. 1 und 2 dargestellt. Als Resultat ist ein störendes Specklemuster anstelle einer gewünschten gleichmäßig hellen Fläche zu sehen.

Dieses Specklemuster kommt durch die Interferenz der beiden Objektpunkte zustande. Würde sich der Betrachter im Betrachterfenster bewegen, würde sich das Specklemuster verändern.

Um eine gleichmäßig hell leuchtende Fläche ohne die störenden Specklemuster zu realisieren, muss daher die sichtbare Auflösung der Rekonstruktion der Szene entweder an das Auflösungsvermögen des Auges oder z.B. an das Auflösungsvermögen bzw. die Abbildungseigenschaften des Rekonstruktionsmittels angepasst werden.

Liegen die Beugungsscheibchen verschiedener Objektpunkte weit voneinander entfernt, so interferieren nur die kleinen Nebenmaxima. Es ergeben sich daher nur geringe Unterschiede zwischen der destruktiven und der konstruktiven Interferenz oder der inkohärenten Überlagerung der Beugungsscheibchen der Objektpunkte.

Eine bessere Reduzierung der Specklemuster erhält man, wenn zwei benachbarte Objektpunkte für die Zusammenstellung in einer Objektpunktgruppe ausgewählt werden, die weit genug auseinander liegen.

Dementsprechend ist in Fig. 4 eine Überlagerung der Intensitäten für einen vierfach größeren Abstand zweier Objektpunkte dargestellt, also für r0a-r0b = 4,0 lambda D /dp.

Die Werte der Intensitäten für die konstruktive und destruktive Interferenz und auch der Wert der inkohärenten Überlagerung beider Objektpunkte unterscheiden sich hier nur sehr wenig voneinander. Die zwei Objektpunkte sind dadurch in der Rekonstruktion deutlich getrennt zu sehen.

Die Fig. 5 zeigt eine Simulation der Rekonstruktion einer zweidimensionalen Anordnung von mit Zufallsphasen berechneten Objektpunkten für einen Objektpunktabstand gemäß Fig. 4. Die Objektpunkte sind einzeln aufgelöst zu erkennen. Aufgrund der größeren Abstände der Objektpunkte zueinander tritt ein Specklemuster nicht mehr auf.

Mit einem einzelnen Hologramm gemäß Fig. 5 lässt sich eine zusammenhängende Fläche aber nicht darstellen. Dazu ist die Überlagerung mehrerer Rekonstruktionen mit einem Objektpunktabstand wie für Fig. 5 nötig, aber mit verschobenen Objektpunkten.

Für die Verschiebung wird zunächst eine zweidimensionale Anordnung von Objektpunkten mit einem Abstand 1,0 lambda D / dp wie in Fig. 1 verwendet. Diese Objektpunkte werden in verschiedene Objektpunktgruppen aufgeteilt, in denen sie einen Mindestabstand 4,0 lambda D / dp wie in Fig. 4 haben. Aus jeder Objektpunktgruppe wird dann ein Hologramm berechnet und im Lichtmodulationsmittel dargestellt.

Die Darstellung in Fig. 6 zeigt eine Simulation einer Rekonstruktion, bei der von 16 Hologrammen 16 Einzelrekonstruktionen erzeugt und inkohärent überlagert wurden.

Das in Fig. 5 gezeigte Hologramm wurde zur Simulation verwendet. Dazu wurde für eine Fläche, stellvertretend für eine Schnittebene, ein Raster für die Objektpunkte mit einem Rastermass von 1,0 lambda D / dp in horizontaler und vertikaler Richtung generiert. Die Objektpunkte wurden zu 16 Objektpunktgruppen zusammengestellt. Innerhalb einer Objektpunktgruppe haben die Objektpunkte einen Mindestabstand von 4,0 lambda D / dp in horizontaler und vertikaler Richtung. Daraus wurden 16 Hologramme berechnet. Die Rekonstruktionen aller 16 Hologramme wurden intensitätsmäßig inkohärent überlagert. Das heißt, dass die Intensitäten der einzelnen Rekonstruktionen zu einer resultierenden Intensität aufaddiert wurden. Das Ergebnis ist eine rekonstruierte Fläche, die gleichmäßig heller ist und somit gegenüber Fig. 4 wesentlich weniger Specklemuster enthält.

Die schematische Darstellung in Fig. 7 zeigt die Hauptkomponenten eines holographischen Displays gemäß der Erfindung als Direktsichtdisplay. Darin sind mit LQ ein Lichtquellenmittel, RM ein Rekonstruktionsmittel, SLM ein Lichtmodulationsmittel, SM Systemsteuermittel, SE eine der vielen Schnittebenen mit Objektpunkten OP, VW ein Betrachterfenster und AP eine Augenposition im Betrachterfenster VW bezeichnet. Die Schnittebene hat den Abstand D vom Betrachterfenster VW und die Augenpupille ist mit dem Durchmesser dp dargestellt. Vom Betrachterfenster VW zum SLM spannt sich ein Rekonstruktionsraum auf, in dem von der Augenposition AP aus ein Betrachter die rekonstruierte Szene sieht. Zwei Objektpunkte sind in der Schnittebene benachbart so nahe dargestellt, dass sie vom Betrachter nicht mehr getrennt aufgelöst werden können. Die anderen zwei Objektpunkte weisen einen größeren Abstand zueinander auf und gehören einer Objektpunktgruppe an.

Nachfolgend wird die Erfindung anhand von Ausgestaltungsbeispielen näher beschrieben.

In einer ersten Ausgestaltung der Erfindung wird dargelegt, wie die sichtbare Auflösung der Rekonstruktion einer Szene an die sichtbare Auflösung des Auges eines Betrachters angepasst wird.

Zunächst generieren die Systemsteuermittel in einem ersten Verfahrensschritt ein Raster aus Schnittpunkten horizontaler und vertikaler Linien in einer Schnittebene der Szene. Hierzu wird von einer aktuellen Augenposition eines Betrachters ausgegangen. Für diese ist entweder ein Abstand zu den Schnittebenen fest vorgegeben, dann muss sich der Betrachter an einer festen Position aufhalten. Oder der Abstand wird von einem Positionsfinder ermittelt.

Weiterhin wird die Pupillengröße des Betrachters zum Durchführen der Berechnungen benötigt. Dazu wird im Verfahren entweder von einem typischen Durchmesser der Augenpupille ausgegangen, oder der Durchmesser der aktuellen Augenpupille wird ebenfalls vom Positionsfinder oder einem vorgesehenen Sensor ermittelt und in Speichermitteln gespeichert.

Eine andere mögliche Einrichtung zum Ermitteln der aktuellen Größe der Augenpupille ist so ausgebildet, dass ein Sensor den aktuellen Helligkeitswert der zu rekonstruierenden Szene oder des Umgebungslichts in einem Rekonstruktionsraum erfasst und den Recheneinheiten zuführt, die daraus die Pupillengröße berechnen. Anschließend werden an diesen Wert durch die Systemsteuermittel das Rastermass für die jeweilige Schnittebene und der Mindestabstand der Objektpunkte für die Berechnung der einzelnen CGH angepasst.

Die Recheneinheiten als Bestandteil der Systemsteuermittel berechnen mit dem Abstand der Augenposition von jeweils einer Schnittebene der Szene und dem Pupillendurchmesser eine Objektpunktdichte, die dichter als das Auflösungsvermögen des Auges ist. Anhand der Objektpunktdichte bestimmt das Systemsteuermittel das Rastermass für benachbarte Objektpunkte in der jeweiligen Schnittebene. Die Linien des Rasters verlaufen in jeder Richtung parallel zueinander und weisen untereinander das gleiche Rastermass auf. Durch den unterschiedlichen Abstand der einzelnen Schnittebenen zur Augenposition des jeweiligen Betrachters unterscheiden sich die Rastermasse der einzelnen Schnittebenen.

Objektpunkte in benachbarten Rasterpositionen einer Schnittebene weisen horizontal und vertikal einen lateralen Abstand zueinander auf, durch den sie, bezogen auf einen definierten axialen Abstand des Auges zu dieser Schnittebene, nicht mehr getrennt auflösbar sind. Mehrere benachbarte Punkte werden dann als zusammenhängende Fläche wahrgenommen. Damit wird das erste Kriterium der Erfindung, bezogen auf die Objektpunktdichte, erfüllt.

Die für einen zu rekonstruierenden Objektpunkt charakteristischen Daten werden in Speichermitteln der Systemsteuermittel in einem Datensatz gespeichert und sind dort programmtechnisch abrufbar.

In einem zweiten Verfahrensschritt muss die Objektpunktdichte entsprechend dem Zweiten Kriterium der Erfindung reduziert werden, um in der Rekonstruktion die Objektpunkte wieder deutlich getrennt sehen zu können. Deshalb werden solche Objektpunkte einer Schnittebene zu Objektpunktgruppen zusammengestellt, die anhand der gespeicherten Daten einen Abstand zueinander aufweisen, mit dem sie für einen Betrachter in definiertem axialen Abstand zu dieser Schnittebene getrennt aufgelöst gesehen werden.

In der erfindungsgemäßen Einrichtung wird in weiteren Verfahrensschritten aus jeder Objektpunktgruppe ein computergeneriertes Hologramm (CGH) berechnet und in ein Lichtmodulationsmittel kodiert, auf das kohärentes Licht eines Lichtquellenmittels fällt. Zur Modulation der Wellenfronten des einfallenden kohärenten Lichts weist das Lichtmodulationsmittel steuerbare Elemente, z.B. regulär angeordnete Pixel auf.

Für eine eindimensionale Kodierung werden beispielsweise 2, 3 oder 4 Objektpunktgruppen, für eine zweidimensionale Kodierung 4, 9, oder 16 Objektpunktgruppen zusammengestellt und als Hologramme berechnet. Entsprechend groß ist die Anzahl der jeweils zu erzeugenden einzelnen Rekonstruktionen.

Ein Rekonstruktionsmittel der holographischen Einrichtung erzeugt von jeder Objektpunktgruppe eine einzelne Rekonstruktion. Die Systemsteuermittel überlagern die Rekonstruktionen inkohärent, wodurch eine einzige holographische Rekonstruktion der Szene in der Ebene der aktuellen Augenposition eines Betrachters zu sehen ist.

Die inkohärente Überlagerung der einzelnen Rekonstruktionen in der Augenposition kann einerseits zeitsequentiell durchgeführt werden. Dazu werden die einzelnen Rekonstruktionen inkohärent zeitlich so schnell überlagert, dass die Augen des Betrachters zeitlich die Intensität der Rekonstruktion über die Summe der Intensitäten der einzelnen Rekonstruktionen mitteln.

Andererseits kann die inkohärente Überlagerung der einzelnen Rekonstruktionen gleichzeitig durchgeführt werden, indem mit mehreren Lichtmodulatoren und mehreren Rekonstruktionsmitteln gleichzeitig mehrere einzelne Rekonstruktionen erzeugt und inkohärent am Ort der Augenposition überlagert werden.

Objektpunkte der Szene, die die zwei angeführten Kriterien erfüllen, weisen bei ihrer Rekonstruktion nur geringe oder keine Specklemuster auf. In beiden Fällen sieht ein Betrachter von der aktuellen Augenposition aus die Rekonstruktion der gesamten Szene gemittelt nur mit geringem Specklemuster.

In einer zweiten Ausgestaltung der Erfindung wird die sichtbare Auflösung der Rekonstruktion der Szene an die sichtbare Auflösung eines Rekonstruktionsmittels angepasst. Das bedeutet, dass anstelle der Wirkung der Augenpupille die Wirkung der Pupille der Rekonstruktionsoptik bzw. dessen Abbildungsqualität tritt, wobei die Rekonstruktionsoptik ein Bestandteil des Rekonstruktionsmittels ist.

Es kann z.B. auch durch die räumliche Ausdehnung der Lichtquelle oder durch eine nichtideale Wiedergabe der eingeschriebenen Werte auf dem SLM oder durch Aberrationen in der Rekonstruktionsoptik ein einzelner Objektpunkt verbreitert rekonstruiert werden. Die sichtbare Auflösung des Objektpunktes ist dann beugungsbegrenzt nicht durch die Augenpupille gegeben. In diesem Fall ist die Ausgangs-Objektpunktdichte so zu wählen, dass die von der gesamten Einrichtung zur Rekonstruktion tatsächlich rekonstruierten Objektpunkte gerade nicht mehr getrennt, sondern noch als zusammenhängende Fläche wahrgenommen werden.

Dazu wird in einem Verfahrensschritt mindestens eine Messkurve für die Rekonstruktion eines einzelnen Objektpunktes z.B. in verschiedenen Abständen vom SLM mit der vorgesehenen Rekonstruktionsoptik für die holographische Rekonstruktion aufgenommen und im Speichermittel gespeichert. Wahlweise kann auch ein aus der Messkurve berechneter Parameter, der den Objektpunkt charakterisiert, im Speichermittel gespeichert werden. Aus der Breite und dem Verlauf dieser Messkurve bestimmen die Systemsteuermittel die Objektpunktdichte und legen in Abhängigkeit von einer aktuellen Augenposition des Betrachters ein Raster für die Objektpunkte der Szene fest. Wie bereits in der ersten Ausgestaltung beschrieben, muss dann die Objektpunktdichte wieder reduziert werden.

Dazu werden Objektpunkte mit einem definierten Abstand zueinander ausgewählt und derart zu Objektpunktgruppen zusammengestellt, dass sie einzeln aufgelöst erkennbar sind.

Die Kodierung im Lichtmodulationsmittel und die Rekonstruktion der einzelnen Objektpunktgruppen erfolgen analog den in der ersten Ausgestaltung der Erfindung beschriebenen Verfahrensabläufen unter Berücksichtigung der Abbildungsqualität des Rekonstruktionsmittels.

In einer Variante dieser Ausgestaltung tritt anstelle einer Messkurve für die Rekonstruktion eines Objektpunktes in verschiedenen Abständen vom SLM die Simulation der Eigenschaften der Einrichtung zur Rekonstruktion.

Entsprechend einer dritten Ausgestaltung der Erfindung kann die sichtbare Auflösung der Rekonstruktion der Szene an das Auflösungsvermögen des Lichtmodulationsmittels angepasst werden. Die Rekonstruktion der Szene ist von der Augenposition aus im Betrachterfenster sichtbar. Die Größe des Betrachterfensters ist abhängig vom Auflösungsvermögen des Lichtmodulationsmittels als

$$VW\_h, v = D\ lambda\ /\ p\_h, v$$

wobei D der Abstand des Betrachterauges zum Lichtmodulationsmittel, lambda die Wellenlänge und p_h, v der Pixelpitch zwischen zwei Pixeln in horizontaler (h) oder vertikaler (v) Richtung sind. Dabei sind die zwei Pixel steuerbare Elemente des Lichtmodulationsmittels, in die eine komplexwertige Zahl kodiert ist.

Das Betrachterfenster hat im Allgemeinen eine rechteckige Form.

Ist das Betrachterfenster in einer oder beiden Dimensionen h und/ oder v kleiner als der Durchmesser der Augenpupille dp, so wird die wahrnehmbare Auflösung der Szene durch die Ausdehnung des Betrachterfensters bestimmt und nicht durch die sichtbare Auflösung der Augenpupille.

Ist das Betrachterfenster in beiden Dimensionen kleiner als der Durchmesser der Augenpupille, so tritt z.B. an die Stelle der Airy Funktion das Produkt zweier sinc-Funktionen

$$sinc(D\ lambda/\ vw\_h)\ sinc(D\ lambda/\ vw\_v)$$

Die erfindungsgemäße Einrichtung und das entsprechende Verfahren sind dann analog auf diese Auflösung zu modifizieren.

In einem vierten Ausgestaltungsbeispiel der Erfindung sind eine Einrichtung und ein Verfahren zum holographischen Rekonstruieren einer farbigen Szene vorgesehen. Hier erfolgt die Zerlegung der farbigen Szene programmtechnisch in den Systemsteuermitteln in unterschiedliche Anteile der vorgesehenen Farben. Die farbige Rekonstruktion der Szene wird aus mindestens zwei unterschiedlichen einfarbigen Rekonstruktionen verschiedener Wellenlängen des Lichts erzeugt. Für jeden Farbanteil wird jeweils eine Zerlegung der Szene in Objektpunkte, eine Zusammenstellung der Objektpunkte zu Objektpunktgruppen und eine Berechnung und Kodierung der einfarbigen CGH separat analog der Beschreibung zur ersten Ausgestaltung der Erfindung vorgenommen.

In den Datensätzen der Objektpunkte werden von den Recheneinheiten zum Durchführen des Rekonstruktionsverfahrens für jede Wellenlänge der verwendeten Grundfarben für das Raster unterschiedliche Rastermaße und für die Objektpunktgruppen unterschiedliche Mindestabstände vorgegeben. In Abwandlung dieses Verfahrensschrittes können zum Vereinfachen der Berechnungen und Verfahrensabläufe in den Datensätzen der Objektpunkte für jede Wellenlänge der drei Grundfarben für das Raster gleiche Rastermaße und für die Objektpunktgruppen gleiche Mindestabstände durch die Recheneinheiten vorgegeben werden.

Dabei wird als erstes Kriterium vorteilhaft das Rastermaß für die Objektpunkte der Szene in den Recheneinheiten so klein definiert, dass für die Wellenlängen der verwendeten Grundfarben die Objektpunkte nicht mehr getrennt aufgelöst werden können. Das zweite Kriterium des Verfahrens wird dadurch realisiert, dass der Abstand der Objektpunkte innerhalb einer Objektpunktgruppe in den Recheneinheiten so groß definiert wird, dass für die Wellenlängen der drei Grundfarben die Objektpunkte getrennt aufgelöst werden können.

Mit der Anpassung der Auflösung der Rekonstruktion der farbigen Szene an z.B. die sichtbare Auflösung des Auges wird die Aufgabe gelöst, ein Reduzieren von Specklemustern der Rekonstruktion der Szene zu erreichen.

Eine erfindungsgemäße holographische Rekonstruktionseinrichtung kann als transmissives oder reflektives holographisches Display ausgebildet sein und sowohl für einen Betrachter als auch für mehrere Betrachter konzipiert werden.

**Patentansprüche**

**1.** Verfahren zum holographischen Rekonstruieren einer Szene,
bei welchem die Szene programmtechnisch durch parallele Schnittebenen in Objektpunkte zerlegt wird, die durch Systemsteuermittel anhand eines in den Schnittebenen generierten Rasters ausgewählt und zu Objektpunktgruppen zusammengestellt werden,
bei dem aus jeder Objektpunktgruppe ein computergeneriertes Hologramm (CGH) berechnet und in ein Lichtmodulationsmittel kodiert wird, auf das kohärentes Licht eines Lichtquellenmittels fällt,
bei dem ein Rekonstruktionsmittel aus jedem CGH einer Objektpunktgruppe eine Rekonstruktion erzeugt und die erzeugten Rekonstruktionen durch Aufaddieren der einzelnen CGH inkohärent überlagert, wodurch eine einzige holographische Rekonstruktion der Szene in der Ebene der Augenposition eines Betrachters zu sehen ist, und
bei dem in den Systemsteuermitteln Speichermittel zum Speichern von Datensätzen der Objektpunkte vorgesehen sind, **dadurch gekennzeichnet, dass** die Systemsteuermittel sowohl das Auswählen von Objektpunkten in den Schnittebenen anhand des Rasters als auch die Zusammenstellung der Objektpunkte zu Objektpunktgruppen in Abhängigkeit von der sichtbaren Auflösung der Rekonstruktion der Szene vornehmen, wobei die Systemsteuermittel

- die Schnittebenen in unterschiedlichen Abständen zur Augenposition generieren und jede Schnittebene mit einem Raster versehen, in dem benachbarte Objektpunkte so dicht liegen, dass ihr Abstand zueinander kleiner ist als die sichtbare Auflösung der Rekonstruktion der Szene für die Schnittebene, und

- diejenigen Objektpunkte der jeweiligen Schnittebenen, deren Abstand zueinander größer ist als die sichtbare Auflösung der Rekonstruktion der Szene, zu einer Objektpunktgruppe zusammenstellen und das CGH der Objektpunktgruppe aus den Datensätzen, welche die für die sichtbare Auflösung kennzeichnenden lateralen Abstände der Objektpunkte dieser Gruppe sowie die komplexen Werte der Objektpunkte enthalten, berechnen.

2. Verfahren nach Anspruch 1, bei welchem in den Systemsteuermitteln Recheneinheiten mit dem Abstand der aktuellen Augenposition von der jeweiligen Schnittebene der Szene und dem aktuellen Pupillendurchmesser eines Betrachters eine Objektpunktdichte zum Bestimmen des Rastermaßes für die Objektpunkte in den Schnittebenen berechnen.

3. Verfahren nach Anspruch 1, bei welchem die inkohärente Überlagerung der einzelnen Rekonstruktionen zeitsequentiell durchgeführt wird, so dass die Augen des Betrachters zeitlich die Intensität der Rekonstruktion über die Summe der Intensitäten der einzelnen Rekonstruktionen mitteln oder bei welchem die inkohärente Überlagerung der einzelnen Rekonstruktionen gleichzeitig durchgeführt wird, indem mit mehreren Lichtmodulatoren und mehreren Rekonstruktionsmitteln gleichzeitig mehrere einzelne Rekonstruktionen erzeugt und inkohärent am Ort der Augenposition überlagert werden.

4. Verfahren nach Anspruch 1, bei dem die sichtbare Auflösung der Rekonstruktion der Szene an das Auflösungsvermögen des Lichtmodulationsmittels angepasst wird.

5. Verfahren nach Anspruch 1 zum holographischen Rekonstruieren einer farbigen Szene, bei welchem die Zerlegung der farbigen Szene in unterschiedliche Farbanteile programmtechnisch in den Systemsteuermitteln erfolgt und die farbige Rekonstruktion aus mindestens zwei unterschiedlichen einfarbigen Rekonstruktionen verschiedener Wellenlängen des Lichts erzeugt wird, wobei für jeden Farbanteil jeweils eine Zerlegung der Szene in Objektpunkte, eine Zusammenstellung der Objektpunkte zu Objektpunktgruppen und eine Berechnung der einfarbigen CGH separat erfolgt.

6. Verfahren nach Anspruch 5, bei welchem in den Datensätzen der Objektpunkte für jede Wellenlänge der drei Grundfarben für das Raster unterschiedliche Rastermaße und für die Objektpunktgruppen unterschiedliche Mindestabstände durch die Recheneinheiten vorgegeben werden oder bei welchem in den Datensätzen der Objektpunkte für jede Wellenlänge der drei Grundfarben für das Raster gleiche Rastermaße und für die Objektpunktgruppen gleiche Mindestabstände durch die Recheneinheiten vorgegeben werden.

7. Verfahren nach Anspruch 6, bei welchem das Rastermaß für die Objektpunkte der Szene in den Recheneinheiten so klein definiert wird, dass für die Wellenlängen der drei Grundfarben die Objektpunkte nicht mehr getrennt aufgelöst werden können oder bei welchem der Abstand der Objektpunkte innerhalb einer Objektpunktgruppe in den Recheneinheiten so groß definiert wird, dass für die Wellenlängen der drei Grundfarben die Objektpunkte getrennt aufgelöst werden können.

8. Verfahren nach Anspruch 1 oder 5, bei dem jeder Objektpunkt der zerlegten Szene nur einmal für eine der Objektpunktgruppen ausgewählt wird.

9. Verfahren nach Anspruch 1, bei dem die sichtbare Auflösung der Rekonstruktion der Szene an die Abbildungseigenschaften des Rekonstruktionsmittels angepasst ist und optional wahlweise durch eine Simulation oder aus einer Messkurve ermittelt werden.

10. Verfahren nach Anspruch 1, bei dem die Objektpunktgruppen wahlweise eindimensional oder zweidimensional im Lichtmodulationsmittel kodiert werden.

11. Einrichtung zum holographischen Rekonstruieren einer Szene mit einem Lichtmodulationsmittel, auf das kohärentes Licht eines Lichtquellenmittels fällt und in das computergenerierte Hologramme (CGH) von Objektpunktgruppen der Szene kodiert sind,

einem Rekonstruktionsmittel zur Erzeugung einer Rekonstruktion jedem CGH einer Objektpunktgruppe und zur inkonärenten überlagerung der erzeugten Rekonstruktionen durch Aufaddieren der einzelnen CGH, wodurch eine einzige holographische Rekonstruktion der Szene in der Ebene der Augenposition eines Betrachters zu sehen ist, und Systemsteuermitteln zum Zerlegen der Szene durch parallele Schnittebenen in Objektpunkte, die anhand eines in den Schnittebenen generierten Rasters ausgewählt und zu den Objektpunktgruppen zusammengestellt werden, und die Speichermittel zum Speichern von Datensätzen der Objektpunkte aufweisen, **dadurch gekennzeichnet, dass**
die Systemsteuermittel weiterhin ausgebildet sind,

- die Schnittebenen in unterschiedlichen Abständen zur Augenposition jeweils mit einem Raster zu generieren, in dem benachbarte Objektpunkte so dicht liegen, dass ihr Abstand zueinander kleiner als die sichtbare Auflösung der Rekonstruktion der Szene für die jeweilige Schnittebene ist, und
- diejenigen Objektpunkte der jeweiligen Schnittebenen, deren Abstand zueinander größer als die sichtbare Auflösung der Rekonstruktion der Szene ist, zu einer Objektpunktgruppe zusammenzustellen, und das CGH jeder Objektpunktgruppe aus den Datensätzen, welche die für die sichtbare Auflösung kennzeichnenden lateralen Abstände der Objektpunkte dieser Gruppe sowie die komplexen Werte der Objektpunkte enthalten, zu berechnen.

12. Einrichtung nach Anspruch 11, bei der ein Positionsfinder zum Erfassen der Daten der aktuellen Augenposition mindestens eines Betrachters und der aktuellen Größe der Augenpupille dieses Betrachters vorgesehen ist.

13. Einrichtung nach Anspruch 2 bei welcher der Positionsfinder einen Sensor zum Erfassen eines aktuellen Helligkeitswertes der zu rekonstruierenden Szene oder des Umgebungslichts in einem Rekonstruktionsraum aufweist, wobei der Helligkeitswert zum Ermitteln des aktuellen Pupillendurchmessers dient.

**Claims**

1. Method for holographically reconstructing a scene,
where the scene is divided by parallel section layers into object points by software means, where the object points are selected in accordance with a defined grid in the section layers and combined to form object point groups by system controller means, where a computer-generated hologram (CGH) is computed of each object point group and encoded on a light modulator means which is illuminated by coherent light that is emitted by a light source means, where a reconstruction means generates a reconstruction from each CGH of an object point group and superposes the generated reconstructions incoherently by adding up the individual CGHs, so that a single holographic reconstruction of the scene becomes visible in the plane of the eye position of an observer, and
where the system controller means are provided with storage means for storing data records of the object points, **characterised in that**
the system controller means perform both the selection of object points in the section layers according to the grid and the combination of object points to form object point groups in dependence on the visible resolution of the reconstruction of the scene, where the system controller means

- Generate the section layers at different distances from the eye position and define in each section layer a grid in which adjacent object points are situated so close to each other that their mutual distance is smaller than the visible resolution of the reconstruction of the scene for that section layer, and
- Combine those object points of the respective section layer whose mutual distance is larger than the visible resolution of the reconstruction of the scene to for an object point group, and compute the CGH of the object point group from the data records which comprise the lateral distances between the object points of that group which are characterising of the visible resolution and the complex values of the object points.

2. Method according to claim 1, where computing units in the system controller means compute based on the distance of the actual eye position to the respective section layer of the scene and on the actual eye pupil diameter of an observer an object point density for determining the pitch of the object points in the section layers.

3. Method according to claim 1, where the incoherent superposition of the individual reconstructions is carried out sequentially, so that the eyes of the observer temporally average out the intensity of the reconstruction over the sum of the intensities of the individual reconstructions, or where the incoherent superposition of the individual reconstructions is performed simultaneously, in that multiple light modulators and multiple reconstruction means generate multiple reconstructions at the same time and superpose them incoherently at the position of the observer eye.

4. Method according to claim 1, where the visible resolution of the reconstruction of the scene is adapted to the resolution of the light modulator means.

5. Method according to claim 1 for holographically reconstructing a colour scene, where the colour scene is divided into different colour components by software means in the system controller means, and where the colour reconstruction is composed of at least two different monochromic reconstructions of different wavelengths of the light, where a division of the scene into object points, a combination of the object points to form object point groups, and a computation of the monochromic CGHs is performed separately for each colour component.

6. Method according to claim 5, where different grid pitches are defined for each wavelength of the three primary colours, and different minimum distances are defined for the object point groups by the computing units in the data records of the object points, or where same grid pitches are defined for each wavelength of the three primary colours, and same minimum distances are defined for the object point groups by the computing units in the data records of the object points.

7. Method according to claim 6, where the pitch of the object points of the scene is defined by the computing units to be so small that for the wavelengths of the three primary colours the object points can no longer be resolved as separate points, or where the distance of the object points within an object point group is defined by the computing units to be so large that for the wavelengths of the three primary colours the object points can be resolved as separate points.

8. Method according to claim 1 or 5, where each object point of the divided scene is selected only once for one of the object point groups.

9. Method according to claim 1, where the visible resolution of the reconstruction of the scene is adapted to the imaging properties of the reconstruction means, and where the imaging properties of the reconstruction means optionally are found either by way of a simulation or based on a measured curve.

10. Method according to claim 1, where the object point groups are encoded on the light modulator means either one-dimensionally or two-dimensionally.

11. Device for holographically reconstructing a scene comprising a light modulator means which is illuminated with light emitted by a light source means and on which computer-generated holograms (CGHs) of object point groups of the scene are encoded,
a reconstruction means which generates a reconstruction from each CGH of an object point group and superposes the generated reconstructions incoherently by adding up the individual CGHs, so that a single holographic reconstruction of the scene becomes visible in the plane of the eye position of an observer, and
system controller means for dividing the scene by section layers into object points which are selected in accordance with a defined grid in the section layers and combined to form object point groups, said system controller means comprising storage means for storing data records of the object points, **characterised in that**
the system controller means are further designed

- To generate the section layers at different distances from the eye position always with a grid in which adjacent object points are situated so close to each other that their mutual distance is smaller than the visible resolution of the reconstruction of the scene for the respective section layer, and
- To combine those object points of the respective section layer whose mutual distance is larger than the visible resolution of the reconstruction of the scene to for an object point group, and to compute the CGH of each object point group from the data records which comprise the lateral distances between the object points of that group which are characterising of the visible resolution and the complex values of the object points.

12. Device according to claim 11, comprising a position finder for detecting the information about the actual eye position of at least one observer and about the actual size of the eye pupil of that observer.

13. Device according to claim 12, where the position finder comprises a sensor for detecting an actual brightness value of the scene to be reconstructed or of the ambient light in a reconstruction space, where the brightness value serves to determine the actual diameter of the eye pupil.

**Revendications**

1. Procédé de reconstruction holographique d'une scène,
   dans lequel la scène est, sur le plan de la technique de programmation, décomposée, par des plans de coupe parallèles, en points objets qui sont sélectionnés par des moyens de commande du système à l'aide d'une trame générée dans les plans de coupe et réunis en groupes de points objets,
   dans lequel un hologramme généré par ordinateur (CGH) est calculé à partir de chaque groupe de points objets et codé dans un moyen de modulation de la lumière sur lequel tombe la lumière cohérente d'un moyen de source de lumière,
   dans lequel un moyen de reconstruction produit une reconstruction à partir de chaque CGH d'un groupe de points objets, et superpose de façon non cohérente les reconstructions produites par sommation des différents CGH, ce qui permet de voir une reconstruction holographique unique de la scène dans le plan de la position de l'oeil d'un observateur, et
   dans lequel, dans les moyens de commande du système, il est prévu des moyens de mémoire pour la mémorisation de jeux de données des points objets, **caractérisé en ce que**
   les moyens de commande du système effectuent la sélection de points objets dans les plans de coupe à l'aide de la trame, ainsi que la réunion des points objets en groupes de points objets en fonction de la résolution visible de la reconstruction de la scène, les moyens de commande du système

   - générant les plans de coupe à différentes distances par rapport à la position de l'oeil, et munissant chaque plan de coupe d'une trame dans laquelle des points objets voisins sont si rapprochés que leur distance les uns par rapport aux autres est plus petite que la résolution visible de la reconstruction de la scène pour le plan de coupe, et
   - réunissant en un groupe de points objets les points objets des plans de coupe respectifs dont la distance les uns par rapport aux autres est plus grande que la résolution visible de la reconstruction de la scène, et calculant le CGH du groupe de points objets à partir des jeux de données qui contiennent les distances latérales, caractérisant la résolution visible, des points objets de ce groupe ainsi que les valeurs complexes des points objets.

2. Procédé selon la revendication 1, dans lequel, dans les moyens de commande du système, des unités de calcul, avec la distance de la position de l'oeil actuelle au plan de coupe respectif de la scène et au diamètre de pupille actuel d'un observateur, calculent une densité de points objets pour déterminer la dimension de trame pour les points objets dans les plans de coupe.

3. Procédé selon la revendication 1, dans lequel la superposition non cohérente des reconstructions individuelles est effectuée de façon séquentielle dans le temps de sorte que les yeux de l'observateur font la moyenne dans le temps de l'intensité de la reconstruction sur la somme des intensités des reconstructions individuelles, ou dans lequel la superposition non cohérente des reconstructions individuelles est effectuée simultanément en produisant, avec plusieurs modulateurs de lumière et avec plusieurs moyens de reconstruction, simultanément plusieurs reconstructions individuelles, et en les superposant de façon non cohérente à l'endroit de la position de l'oeil.

4. Procédé selon la revendication 1, dans lequel la résolution visible de la reconstruction de la scène est adaptée au pouvoir de résolution du moyen de modulation de la lumière.

5. Procédé selon la revendication 1 pour la reconstruction holographique d'une scène en couleur, dans lequel la décomposition de la scène en couleur en différentes fractions de couleur est effectuée, au plan de la technique de programmation, dans les moyens de commande du système, et la reconstruction en couleur est produite à partir d'au moins deux reconstructions monochromes différentes de différentes longueurs d'onde de la lumière, une décomposition de la scène en points objets, une réunion des points objets en groupes de points objets et un calcul du CGH monochrome intervenant séparément respectivement pour chaque fraction de couleur.

6. Procédé selon la revendication 5, dans lequel, dans les jeux de données des points objets, les unités de calcul paramètrent, pour chaque longueur d'onde des trois couleurs primaires, différentes dimensions de trame pour la trame, et paramètrent différentes distances minimales pour les groupes de points objets, ou dans lequel, dans les jeux de données des points objets, pour chaque longueur d'onde des trois couleurs primaires, les unités de calcul paramètrent des dimensions de trame identiques pour la trame et des distances minimales identiques pour les groupes de points objets.

7. Procédé selon la revendication 6, dans lequel la dimension de trame pour les points objets de la scène est définie dans les unités de calcul avec des valeurs si faibles que, pour les longueurs d'onde des trois couleurs primaires, les points objets ne peuvent plus être résolus séparément, ou dans lequel la distance des points objets à l'intérieur d'un groupe de points objets est définie dans les unités de calcul avec des valeurs si grandes que, pour les longueurs d'onde des trois couleurs primaires, les points objets peuvent être résolus séparément.

8. Procédé selon la revendication 1 ou la revendication 5, dans lequel chaque point objet de la scène décomposée n'est sélectionné qu'une fois pour un des groupes de points objets.

9. Procédé selon la revendication 1, dans lequel la résolution visible de la reconstruction de la scène est adaptée aux caractéristiques de reproduction du moyen de reconstruction, et peut optionnellement être déterminée au choix par une simulation ou à partir d'une courbe de mesure.

10. Procédé selon la revendication 1, dans lequel les groupes de points objets sont codés au choix en une dimension ou en deux dimensions dans le moyen de modulation de la lumière.

11. Equipement pour la reconstruction holographique d'une scène avec
un moyen de modulation de la lumière sur lequel tombe la lumière cohérente d'un moyen de source de lumière, et dans lequel sont codés des hologrammes générés par ordinateur (CGH) de groupes de points objets de la scène, un moyen de reconstruction pour la production d'une reconstruction à partir de chaque CGH d'un groupe de points objets et pour la superposition non cohérente des reconstructions produites par sommation des différents CGH, ce qui permet de voir une reconstruction holographique unique de la scène dans le plan de la position de l'oeil d'un observateur, et
avec des moyens de commande du système pour la décomposition de la scène, par des plans de coupe parallèles, en points objets qui sont sélectionnés à l'aide d'une trame générée dans les plans de coupe et réunis en groupes de points objets, et qui présentent des moyens de mémoire pour la mémorisation de jeux de données des points objets,
**caractérisé en ce que**
les moyens de commande du système sont également formés pour

- générer les plans de coupe à différentes distances par rapport à la position de l'oeil respectivement avec une trame dans laquelle des points objets voisins sont si proches les uns des autres que leur distance les uns par rapport aux autres est plus petite que la résolution visible de la reconstruction de la scène pour le plan de coupe respectif, et
- réunir en un groupe de points objets les points objets des plans de coupe respectifs dont la distance les uns par rapport aux autres est plus grande que la résolution visible de la reconstruction de la scène, et calculer le CGH de chaque groupe de points objets à partir des jeux de données qui contiennent les distances latérales, qui caractérisent la résolution visible, des points objets de ce groupe ainsi que les valeurs complexes des points objets.

12. Equipement selon la revendication 11, dans lequel il est prévu un chercheur de position pour la détection des données de la position de l'oeil actuelle d'au moins un observateur et de la grandeur actuelle de la pupille oculaire de cet observateur.

13. Equipement selon la revendication 12, dans lequel le chercheur de position présente un capteur pour la détection d'une valeur de luminosité actuelle de la scène à reconstruire ou de la lumière ambiante dans un espace de reconstruction, la valeur de luminosité servant à déterminer le diamètre de pupille actuel.

Amplitude / a.u.

1,0

0,8

0,6

0,4

0,2

0,0

0    20   40   60   80   100  120  140  160

Ort / a.u.

Figur 1

········ konstruktiv

········ destruktiv

───── inkohärent

Intensität / a.u.

2,0

1,5

1,0

0,5

0,0

0    20   40   60   80   100  120  140  160

Ort /a.u.

Figur 2

Figur 3

Figur 4

Figur 5

Figur 6

Figur 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1563346 A2
- DE 102004063838 A1
- DE 102005023743 A1